(19) Europäisches Patentamt
European Patent Office
Office européen des brevets

(11) EP 4 644 448 A1

(12) EUROPEAN PATENT APPLICATION

(43) Date of publication:
**05.11.2025 Bulletin 2025/45**

(21) Application number: **24174161.0**

(22) Date of filing: **03.05.2024**

(51) International Patent Classification (IPC):
***C08G 18/10*** *(2006.01)* ***C08G 18/12*** *(2006.01)*
***C08G 18/36*** *(2006.01)* ***C08G 18/42*** *(2006.01)*
***C08G 18/48*** *(2006.01)* ***C08G 18/73*** *(2006.01)*
***C09D 175/04*** *(2006.01)* ***C09D 175/06*** *(2006.01)*
***C09D 175/08*** *(2006.01)*

(52) Cooperative Patent Classification (CPC):
(C-Sets available)
**C08G 18/36; C08G 18/10; C08G 18/12; C08G 18/4202; C08G 18/4238; C08G 18/4277; C08G 18/4825; C08G 18/4854; C08G 18/73; C09D 175/04; C09D 175/06; C09D 175/08** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro Deutschland AG**
**51373 Leverkusen (DE)**

(72) Inventors:
- **Suetterlin, Jan**
  **51061 Köln (DE)**
- **Durgut, Erkan**
  **44867 Bochum (DE)**
- **Krieger, German**
  **71701 Schwieberdingen (DE)**

(74) Representative: **Levpat**
**c/o Covestro AG**
**Gebäude K12**
**51365 Leverkusen (DE)**

# (54) COMPOSITION COMPRISING PREPOLYMERS

(57) The application is directed to a c composition A comprising
A1 an isocyanate compound, comprising an isocyanate-terminated prepolymer B which is obtained by reaction of a composition comprising
B1 at least one isocyanate-reactive compound,
B2 at least one polyisocyanate, and
optionally
B3 additives,

A2 a catalyst,
A3 a polyol, and
wherein component B1 comprises at least one compound B 1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof,
and wherein component A3 comprises at least a polyol A3.1 with a molecular weight of 210 g/mol or less.

The application further provides a process for preparing a coating, a coating obtained by the process and the use of said coating for wind turbines and construction applications.

EP 4 644 448 A1

(52) Cooperative Patent Classification (CPC): (Cont.)

C-Sets
**C08G 18/10, C08G 18/3206;**
**C08G 18/12, C08G 18/3206**

## Description

The invention pertains to a composition comprising an isocyanate-terminated prepolymer, a catalyst and a polyol, a process for preparing a coating, a coating obtained by the process and the use of said coating.

Isocyanates are attractive building blocks for coatings, because they can be easily cured by a multitude of nucleophilic curing agents and, depending on the specific combination of isocyanate and curing agent, a huge range of property profiles in terms of hardness, softness, scratch resistance, chemical resistance, etc., can be tailored according to the need of the user.

In many application areas there is a need for flexible coatings, specific examples being the applications of flooring or waterproofing that require good elongation at break values in order to bridge emerging cracks and tolerate high degrees of substrate deformation. Another application where flexible coatings are beneficial are coatings for leading edge protection of rotor blade. In order to introduce flexibility into the coatings, prepolymers from isocyanates and polyols are useful because they increase the distance between crosslinks and lower the glass transition temperature in the resulting coating allowing larger elongation at break.

The predominant curing method for isocyanates is polyurethane formation by reaction with polyols. Compared to other common curing methods of isocyanates such as moisture cure, it has the advantage of lacking carbon dioxide formation, and hence, it allows thicker coating layers without gas inclusion defects. Coatings comprising aliphatic isocyanates show better weathering (e.g. non-yellowing) properties than coatings from aromatic isocyanates, but aliphatic isocyanates have the disadvantage of being much less reactive than aromatic isocyanates. For that reason, the curing process of aliphatic isocyanates is typically accelerated by the use of catalysts.

Since prepolymers with significant amounts of polyols show a reduced content of isocyanate groups compared to low-molecular weight polyisocyanates, it is expected that formulations comprising prepolymers dry generally slower than formulations comprising low-molecular weight polyisocyanates. When low curing temperatures are required, this disadvantage is even more prominent. This is true for prepolymer examples found in the prior art, especially for aliphatic prepolymers based on polypropylene glycol polyols which are one of the most common polyol types in coatings due to its high availability.

EP 2 849 937 A1 discloses a composition for rain-erosion protective coatings for rotor blades comprising a prepolymer as isocyanate-functional component, a hydroxyl-functional compound having two terminal hydroxyl groups and a molecular weight of less than 250 g/mol and a hydroxyl-functional compound having two terminal hydroxyl groups and a molecular weight of at least 250 g/mol. In the examples a linear isocyanate-terminated prepolymer based on hexamethylene diisocyanate is used as isocyanate component and polytetrahydrofuran with a molecular weight of 250 g/mol and 1000 g/mol were used in combination with 1,4-butanediol as polyols. The curing is carried out in the presence of a catalyst. However, EP 2 849 937 A1 is silent about the curing speed of these formulations and does not disclose prepolymers comprising the specific isocyanate-reactive compounds B 1.1 according to the invention.

WO 2016/116376 A1 discloses the preparation of isocyanate-terminated prepolymers comprising polyester polyols. A coating composition comprising the isocyanate-terminated prepolymers, a polyaspartic acid ester, a polyetheraspartic acid ester, hexamethylene diisocyanate and additives are applied onto a glass substrate and cured at room temperature. Although the drying time is mentioned in the examples of WO 2016/116376 A1, the coating compositions comprising the prepolymers comprising polyester polyols are longer than comprising no prepolymer. Further, WO 2016/116376 A1 does not disclose a coating composition comprising a polyol A3.1 according to the invention as well as a catalyst A2.

It is an object of the invention to provide a composition which results in reduced curing time. The reduced curing time may be represented by the drying times according to DIN EN ISO 9117-5 and are preferably for T1 < 500 min, more preferably < 350 min, for T3 preferably less than 400 min and for T4 preferably less than 12 h, more preferably less than 9 h. In a preferred embodiment, the provided composition results in coatings with high flexibility, like elongation at break and tensile strength at break, and more preferably has low amount of byproducts or solvents.

The object is solved by a composition A comprising

A1 an isocyanate compound, comprising an isocyanate-terminated prepolymer B which is obtained by reaction of a composition comprising

B1 at least one isocyanate-reactive compound,
B2 at least one polyisocyanate, and
optionally
B3 additives,

A2 a catalyst,
A3 a polyol, and

wherein component B1 comprises at least one compound B 1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof,
and wherein component A3 comprises at least a polyol A3.1 with a molecular weight of 210 g/mol or less.

The present invention also provides a process for preparing a coating comprising the steps of

(i) applying a composition A onto a substrate, comprising

A1 an isocyanate compound, comprising an isocyanate-terminated prepolymer B which is obtained by reaction of a composition comprising

B1 at least one isocyanate-reactive compound,
B2 at least one polyisocyanate, and
optionally
B3 additive,

A2 a catalyst,

A3 a polyol, and

(ii) curing the composition A on the substrate.

wherein component B1 comprises at least one compound B 1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof,

and wherein component A3 comprises at least a polyol A3.1 with a molecular weight of 210 g/mol or less.

The invention further provides a coating obtained by the process of the invention as well as the use of said coating for wind turbines or construction applications.

**Component A1**

According to the invention, the composition A comprises an isocyanate-terminated prepolymer B as isocyanate compound A1. The isocyanate compound A1 can further comprise additional isocyanates, for example aliphatic or aromatic polyisocyanates. Suitable polyisocyanates are aliphatic diisocyanates like hexamethylene diisocyanate (HDI), pentamethylene diisocyanate (PDI), isophorone diisocyanate (IPDI), butylene diisocyanate (BDI), bis(isocyanatocyclohexyl)methane ($H_{12}$MDI), 2,2,4-trimethylhexamethylene diisocyanate, bis(isocyanatomethyl)cyclohexane, bis(isocyanatomethyl)tricyclodecane, xylene diisocyanate (XDI), tetramethylxylylene diisocyanate, norbornane diisocyanate, cyclohexane diisocyanate or diisocyanatododecane, preference being given to hexamethylene diisocyanate (HDI), isophorone diisocyanate (IPDI), butylene diisocyanate (BDI), and bis(isocyanatocyclohexyl)methane ($H_{12}$MDI). More preferred aliphatic diisocyanates are linear diisocyanates, like HDI or BDI. Further suitable are aromatic diisocyanates like toluene 2,4-diisocyanate (2,4-TDI), toluene 2,6-diisocyanate (2,6-TDI) or methylene diphenyl 2,2'-diisocyanate (2,2'-MDI), methylene diphenyl 2,2'-diisocyanate (2,4'-MDI), methylenediphenyl 4,4'-diisocyanate (4,4'-MDI), or mixtures of at least two of these.

It is further suitable to use polyisocyanates with uretdione, isocyanurate, allophanate, urea, biuret, iminooxadiazinedione and / or oxadiazine trione structures which are also called modified polyisocyanates. The modified polyisocyanates can be obtained from the aliphatic and aromatic diisocyanates mentioned above.

It is also possible that besides the isocyanate-terminated prepolymer B, an additional isocyanate-terminated prepolymer different to the isocyanate-terminated prepolymer B is used as a further isocyanate compound A1. Preferably, the isocyanate compound A1 is free from prepolymers different to the isocyanate-terminated prepolymer B.

In a preferred embodiment the isocyanate compound A1 comprises at least 30 wt.-% of the prepolymer B and optionally an aliphatic polyisocyanate, more preferably the isocyanate compound A1 consists of the isocyanate-terminated prepolymer B.

## Component B

The isocyanate-terminated prepolymer B of the invention is obtained by reaction of at least one polyol B1 and at least one polyisocyanate B2. Optionally, the reaction is carried out in the presence of additives B3. It is preferred that the polyisocyanate B2 and the isocyanate-reactive compound B1 are reacted in an NCO : OH equivalent ratio of 1.5 : 1 to 20 : 1, preferably 2 : 1 to 18 : 1 and most preferably 4 : 1 to 16 : 1. The reaction takes place at temperatures of 20 °C to 200 °C, preferably 40 °C to 140 °C, more preferably 50 °C to 120 °C. Preferably, when using an excess of polyisocyanate B2 of more than 2 : 1, excess of monomeric polyisocyanate is removed after reaction by extractive methods known in the art (e. g. thin film evaporation).

The NCO-functionality of the isocyanate-terminated prepolymer B is preferably in the range of from 1.5 to 4, preferably 1.8 to 3, more preferably 1.9 to 2.1. It is also possible to modify the isocyanate-terminated prepolymer B in a subsequent step, for example by trimerization of the terminal isocyanate groups of the isocyanate-terminated prepolymer B. This results in an isocyanate-terminated prepolymer B with high functionality. A process for preparing such a prepolymer is for example disclosed in EP 0 336 205 A2.

In a preferred embodiment the isocyanate-terminated prepolymer B has a residual monomer content of 1 wt.-% or less, preferably 0.5 wt.-% or less, more preferably 0.3 wt.-% or less.

The isocyanate content of the isocyanate-terminated prepolymer B is preferably in the range of from 2 to 20%, more preferably 4 to 18% and most preferably 8 to 15%.

The melting point of the prepolymer B is preferably < 50 °C, more preferably < 40 °C, even more preferably < 30 °C, most preferably < 23 °C (liquid at room temperature).

## Component B1

For the preparation of the isocyanate-terminated prepolymer B, at least one isocyanate-reactive compound B1 is used. According to the invention, the at least one isocyanate-reactive compound B1 comprises at least one compound B1.1 with a number-average molecular weight in the range of from 150 g/mol to 1500 g/mol, preferably 150 g/mol to 1200 g/mol, which is selected from the group of poly(ε-caprolactone), castor oil, hydrogenated castor oil, polytetrahydrofurane, poly(1,3-propanediol), polyesterpolyol and mixtures thereof. The OH-functionality of the compound B 1.1 is preferably in the range of from 1.5 to 4, preferably 1.8 to 3, more preferably 1.9 to 2.1.

In a preferred embodiment, the isocyanate-reactive compound B1 comprises at least one compound B1.1, preferably consists of compound B1.1, which is selected from the group consisting of

(I) poly(1,3-propanediol) with a number-average molecular weight in the range of from 150 g/mol to 1300 g/mol, more preferably 150 g/mol to 1100 g/mol, most preferably 280 g/mol to 900 g/mol,

(II) poly(ε-caprolactone) with an OH-functionality of 2 and a number-average molecular weight in the range of from 160 g/mol to 950 g/mol, preferably 200 g/mol to 800 g/mol, more preferably 280 g/mol to 600 g/mol, wherein the poly(ε-caprolactone) is preferably started on glycerol, trimethylolpropane, pentaerythritol, butanediol, hexanediol, neopentyl glycol and/or diethylene glycol, more preferably butanediol, hexanediol, neopentyl glycol and/or diethylene glycol,

(III) poly(tetrahydrofurane) with a number-average molecular weight in the range of from 150 to 1500 g/mol, preferably 150 g/mol to 1200 g/mol, more preferably 280 to 1000 g/mol,

(IV) polyester polyol with a molecular weight in the range of from 150 to 1500 g/mol, preferably 150 g/mol to 1200 g/mol, obtained from carboxylic diacids, preferably succinic acid, glutaric acid, adipic acid, pimelic acid, suberic acid, azelaic acid, sebacic acid, decanedicarboxylic acid, maleic acid, fumaric acid, itaconic acid, hexahydrophthalic acid and tetrahydrophthalic acid, and/or their anhydrides with an excess of multifunctional alcohols, preferably diols and/or triols like ethane-1,2-diol, propane-1,3-diol, butane-1,4-diol, pentane-1,5-diol, hexane-1,6-diol, heptane-1,7-diol, octane-1,8-diol, nonane-1,9-diol, decane-1,10-diol, dodecane-1,12-diol, cyclohexane-1,2- and -1,4-diol, cyclohexane-1,4-dimethanol, 4,4'-(1-methylethylidene)biscyclohexanol, propane-1,2,3-triol (glycerol), 1,1,1-trimethylolethane, hexane-1,2,6-triol, 1,1,1-trimethylolpropane, 2,2-bis(hydroxymethyl)propane-1,3-diol, polyether diols with a molecular weight of 1000 g/mol or less, for example diethylene glycol and dipropylene glycol, and branched aliphatic diols, for example propane-1,2-diol, butane-1,3-diol, 2-methylpropanediol, 2,2-dimethyl-1,3-propanediol (neopentyl glycol), hexane-1,2-diol, 2-methylpentane-2,4-diol, 3-methylpentane-1,5-diol, 2-ethylhexane-1,3-diol, octane-1,2-diol, 2,2, 4-trimethylpentane-1,5-diol, 2-butyl-2-ethylpropane-1,3- diol, 2,2,4- and/or 2,4,4-trimethylhexanediol, decane-1,2-diol or any desired mixtures of such alcohols, more preferably diols,

(V) castor oil or hydrogenated castor oil with a number-average molecular weight in the range of from 600 to 1500

g/mol, preferably 850 g/mol to 1200 g/mol,
or

(VI) any combination of (I), (II), (III), (IV) and (V).

In this invention the term poly(1,3-propanediol) is used interchangeably with polytrimethylene ether glycol (PO3G) and describes a polyol of formula (1),

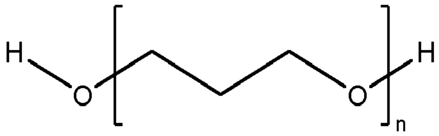

(1)

wherein n denotes an integer from 2 to 24, preferably 2 to 22, more preferably 4 to 10. The compound can be produced for example by a ring-opening polymerization from oxetane or by polycondensation of 1,3-propane diol as exemplified in EP 3 689 943 A1.

The poly(ε-caprolactone) is based on a starter, preferably a polyol, more preferably glycerol, trimethylolpropane, pentaerythritol, butanediol, hexanediol, neopentyl glycol and/or diethylene glycol, most preferably butanediol, hexanediol, neopentyl glycol and/or diethylene glycol. The poly(ε-caprolactone) may be a homopolymer where only caprolactone reacts with the starter or may be a copolymer where a mixture of caprolactone and further reactants, like dialkylcarbonates, carboxylic acids or anhydrides thereof, react with the starter. In a preferred embodiment, the poly(ε-caprolactone) is preferably according to formula (2),

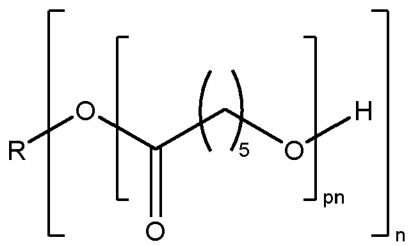

(2)

wherein R denotes the starter without OH groups that have reacted with at least one caprolactone, the starter is preferably glycerol, trimethylolpropane, pentaerythritol, butanediol, hexanediol, neopentyl glycol and/or diethylene glycol, and $p_n$ denotes the number of repeat units attached to each OH group of the starter and is an integer in the range of from 0 to 5, preferably 1 to 4, and n is an integer from 2 to 4, preferably 2. $p_1$, $p_2$, $p_3$ and $p_4$ may be different from each other.

The isocyanate-reactive compound B1 used for the preparation of the isocyanate-terminated prepolymer B preferably comprises at least 80 wt.-%, more preferably at least 90 wt.-%, even more preferably 95 wt.-% and most preferred 100 wt.-%, based on the weight of the isocyanate-reactive compound B1, a compound B1.1, preferably a compound B1.1 according to any of (I) to (VI). It is also suitable to use further isocyanate-reactive compounds B1 which do not fall under the definition of compound B1.1, like mono- and polyhydric alcohols different to B1.1 or mono- and polyfunctional amines that are known per se to the person skilled in the art, and mixtures thereof. Polyhydric alcohols are for example polyether polyols, preferably with a number-average molecular weight in the range of 200 to 10000 g/mol, more preferred 400 to 2500 g/mol and an OH-functionality of preferably 1.8 to 6, more preferably 1.9 to 2.1, and most preferably 1.9 to 2.0. The polyether polyols are obtained by ring-opening polymerization of cyclic ethers in the presence of starter compounds with hydroxyl groups.

Suitable starter compounds with hydroxyl groups are water or compounds with an OH-functionality of 2 to 6, like propylene glycol, 1,3-propanediol, ethylene glycol, diethylene glycol, dipropylene glycol, 1,2-butanediol, 1,3-butanediol, 1,4-butanediol, hexanediol, pentanediol, 3-methylen-1,5-pentanediol, 1,12-dodecanediol, glycerol, trimethylolpropane, triethanolamine, pentaerythritol, sorbitol, sucrose, hydroquinone, catechol, resorcinol, bisphenol F, bisphenol A, Benzene-1,3,5-triol, or condensation products of formaldehyde and phenol comprising methylol groups. The starter compounds can be used alone or as mixture. The starter compound is preferably selected from the group consisting of propylene glycol, 1,3-propanediol, glycerol, trimethylolpropane and pentaerythritol.

Suitable cyclic ethers are ethylene oxide, propylene oxide, 1,2-butylene oxide, 2,3-butylene oxide, 2-methyl-1,2-propylene oxide, 1,2-pentylene oxide, 2,3-pentylene oxide, 2-methyl-1,2-butylene oxide, 3-methyl-1,2-butylene oxide, 1,2-hexylene oxide, 2,3-hexylene oxide, 3,4-hexylene oxide, 2-methyl-1,2-pentylene oxide, 4-methyl-1,2-pentylene oxide, 2-ethyl-1,2-butylene oxide, 1,2-heptylene oxide, 1,2-octylene oxide, 1,2-nonylene oxide, 1,2-decylene oxide,

1,2-undecylene oxide, 1,2-dodecylene oxide, 4-methyl-1,2-pentylene oxide, butadiene monoxide, isoprene monoxide, cyclopentene oxide, cyclohexene oxide, cycloheptene oxide, cyclooctene oxide, styrene oxide, methyl styrene, pinene oxide, derivatives of glycidol, like methyl glycidyl ether, ethyl glycidyl ether, 2-ethylhexyl glycidyl ether, allyl glycidyl ether, trimethylene oxide, tetramethylene oxide (THF), pentamethylene oxide, hexamethylene oxide, heptamethylene oxide and decamethylene oxide. It is also possible to copolymerize more than one of said cyclic ethers. The cyclic ether is preferably propylene oxide, ethylene oxide and/or tetramethylene oxide (THF), more preferably propylene oxide and/or tetramethylene oxide (THF).

It is also suitable to use so-called chain extenders. Suitable chain extenders are preferably aliphatic diols having 2 to 14 carbon atoms, such as for example ethanediol, butane-1,4-diol, hexane-1,6-diol, octane-1,8-diol, decane-1,10-diol, dodecane-1,12-diol, diethylene glycol and dipropylene glycol. However, also suitable are diesters of terephthalic acid with glycols having 2 to 4 carbon atoms, such as for example terephthalic acid bis-ethylene glycol or terephthalic acid bis-butane-1,4-diol, hydroxyalkylene ethers of hydroquinone, such as for example 1,4-di(hydroxyethyl)hydroquinone and ethoxylated bisphenols. Particular preference is given to using ethanediol, butane-1,4-diol, hexane-1,6-diol, and 1,4-di(hydroxyethyl)-hydroquinone. Mixtures of the abovementioned chain extenders may also be used.

In a preferred embodiment, the isocyanate-reactive compound B1 is free of polyester polyols different than (II).

The molecular weight M of the isocyanate-reactive compound B1 is calculated by

$$M = \frac{56.1 * 1000 * f}{OH}$$

wherein f is the hydroxyl-functionality of the isocyanate-reactive compound B1 and OH the OH-value of the isocyanate-reactive compound B1, preferably measured according to DIN 53240-1 of June 2013.

**Component B2**

Suitable polyisocyanates as component B2 are the polyisocyanates as described for component A1. The polyisocyanates B2 are preferably aliphatic diisocyanates like hexamethylene diisocyanate (HDI), pentamethylene diisocyanate (PDI), isophorone diisocyanate (IPDI), butylene diisocyanate (BDI), bis(isocyanatocyclohexyl)methane ($H_{12}$MDI), 2,2,4-trimethylhexamethylene diisocyanate, bis(isocyanatomethyl)cyclohexane, bis(isocyanatomethyl)tricyclodecane, xylene diisocyanate (XDI), tetramethylxylylene diisocyanate, norbornane diisocyanate, cyclohexane diisocyanate or diisocyanatododecane, preference being given to hexamethylene diisocyanate (HDI), isophorone diisocyanate (IPDI), butylene diisocyanate (BDI), and bis(isocyanatocyclohexyl)methane (HMDI).

In a preferred embodiment, the polyisocyanate B2 is hexamethylene diisocyanate (HDI), pentamethylene diisocyanate (PDI), modified polyisocyanates based on the before mentioned or mixtures thereof, more preferably the polyisocyanate B2 is hexamethylene diisocyanate or modified polyisocyanates based on hexamethylene diisocyanate, most preferably hexamethylene diisocyanate.

**Component B3**

In the process for producing the isocyanate-terminated prepolymer B, additives can be used as component B3 which may also remain in the isocyanate-terminated prepolymer B after the process. Preferably, the amount of additive in the process is in the range of from 0 to 5 wt.-%, based on the total weight of the isocyanate-terminated prepolymer B , more preferably 0 to 4 wt.-%, most preferred 0.001 to 2 wt.-%. Examples of additives are stabilizers, solvents or catalysts.

Examples of solvents are ketones such as acetone, methyl ethyl ketone or hexanone, esters such as ethyl acetate, butyl acetate, methoxyproyl acetate, substituted glycols and other ethers, aromatics such as xylene or solventnaphtha such as Exxon-Chemie and mixtures of said solvents. If the NCO-reactive part of the composition is present as an aqueous dispersion, water is also suitable as a solvent or diluent.

Suitable catalysts are for example organotin compounds, bismuth compounds, zinc compounds, titanium compounds, zirconium compounds or aminic catalysts. If one or more catalysts are used, preferably 0.001 wt.-% to 5 wt.-%, more preferably 0.002 wt.-% to 2 wt.-% catalyst, based on the total weight of the isocyanate-terminated prepolymer B, are used.

In a preferred embodiment, the isocyanate-terminated prepolymer B is obtained by reaction of

B1 4 to 80 wt.-%, preferably 4 to 60 wt.-%, of an isocyanate-reactive compound, comprising at least 80 wt.-%, based on the weight of isocyanate-reactive compounds B1, of at least one compound B1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof,

with

B2 20 to 96 wt.-%, preferably 40 to 96 wt.-%, of a polyisocyanate, comprising hexamethylene diisocyanate or modified polyisocyanates based on hexamethylene diisocyanate, preferably consists of hexamethylene diisocyanate, modified polyisocyanates based on hexamethylene or a mixture thereof,
in the presence of

B3 0 to 5 wt.-% of additive, preferably 0.001 to 5 wt.-% wherein the additive comprises a catalyst,

wherein the sum of wt.-% of isocyanate-reactive compound B1, polyisocyanate B2 and additive B3 equals 100 wt.-%, and

optionally a subsequent step for reducing residual monomer content, preferably by thin-film evaporation.

**Component A2**

The composition further comprises a catalyst A2. The catalyst comprises preferably organotin compounds, bismuth compounds, zinc compounds, titanium compounds, zirconium compounds or aminic catalysts, more preferably the catalyst is selected from organotin compounds, bismuth compounds, zinc compounds, titanium compounds, zirconium compounds or aminic catalysts, and most preferably the catalyst is an organotin compound like dibutyltin dilaurate. The catalyst A2 can further comprise solvents, like butyl acetate.
The composition comprises the catalyst A2 preferably in an amount of 0.001 to 10 wt.-%, more preferably 0.01 to 1 wt.-%, even more preferably 0.02 to 0.5 wt.-%, most preferably 0.02 to 0.1 wt.-%, based on the total weight of the composition A.

**Component A3**

According to the invention, the composition further comprises as component A3 a polyol, comprising at least a polyol A3.1 with a molecular weight of 210 g/mol or less. Preferably, the molecular weight of the polyol A3.1 is in the range of from 64 to 210 g/mol, more preferably 70 to 180 g/mol, most preferably 80 to 140 g/mol. The polyol A3.1 may have a OH-functionality in the range of from 2 to 6, preferably 2 or 3, more preferably 2.
Examples of a polyol according to component A3.1 are butanediol, pentanediol, hexanediol, octanediol, decanediol, dodecanediol, ethylene glycol, diethylene glycol, propylene glycol or dipropylene glycol. Preferred polyols for component A3.1 are butanediol, hexanediol, octanediol, decanediol and dodecanediol.
Component A3 can further comprise polyols which are different to polyol A3.1, for example polyether polyols, preferably with a number-average molecular weight in the range of more than 210 to 10000 g/mol, more preferred 400 to 2500 g/mol and an OH-functionality of preferably 1.8 to 6, more preferably 1.9 to 2.1, and most preferably 1.9 to 2.0. The polyether polyols are obtained by ring-opening polymerization of cyclic ethers in the presence of starter compounds with hydroxyl groups.
Suitable starter compounds with hydroxyl groups are water or compounds with an OH-functionality of 2 to 6, like propylene glycol, 1,3-propanediol, ethylene glycol, diethylene glycol, dipropylene glycol, 1,2-butanediol, 1,3-butanediol, 1,4-butanediol, hexanediol, pentanediol, 3-methylen-1,5-pentanediol, 1,12-dodecanediol, glycerol, trimethylolpropane, triethanolamine, pentaerythritol, sorbitol, sucrose, hydroquinone, catechol, resorcinol, bisphenol F, bisphenol A, Benzene-1,3,5-triol, or condensation products of formaldehyde and phenol comprising methylol groups. The starter compounds can be used alone or as mixture. The starter compound is preferably selected from the group consisting of propylene glycol, 1,3-propanediol, glycerol, trimethylolpropane and pentaerythritol.
Suitable cyclic ethers are ethylene oxide, propylene oxide, 1,2-butylene oxide, 2,3-butylene oxide, 2-methyl-1,2-propylene oxide, 1,2-pentylene oxide, 2,3-pentylene oxide, 2-methyl-1,2-butylene oxide, 3-methyl-1,2-butylene oxide, 1,2-hexylene oxide, 2,3-hexylene oxide, 3,4-hexylene oxide, 2-methyl-1,2-pentylene oxide, 4-methyl-1,2-pentylene oxide, 2-ethyl-1,2-butylene oxide, 1,2-heptylene oxide, 1,2-octylene oxide, 1,2-nonylene oxide, 1,2-decylene oxide, 1,2-undecylene oxide, 1,2-dodecylene oxide, 4-methyl-1,2-pentylene oxide, butadiene monoxide, isoprene monoxide, cyclopentene oxide, cyclohexene oxide, cycloheptene oxide, cyclooctene oxide, styrene oxide, methyl styrene, pinene oxide, derivatives of glycidol, like methyl glycidyl ether, ethyl glycidyl ether, 2-ethylhexyl glycidyl ether, allyl glycidyl ether, trimethylene oxide, tetramethylene oxide (THF), pentamethylene oxide, hexamethylene oxide, heptamethylene oxide and decamethylene oxide.
In a preferred embodiment, component A3 comprises at least 25 wt.-% of a polyol A3.1, more preferably at least 60 wt.-%, even more preferably at least 75 wt.-%, based on the weight of component A3, most preferably component A3 consists of polyol A3.1.

The composition may comprise further compounds which are different to A1, A2 and A3. For example polyaspartic acid esters or polyetheraspartic acid esters, or common additives, like stabilizers, pigments, or fillers. Preferably, the composition A is free of polyaspartic acid esters or polyetheraspartic acid esters because these compounds reduce the tensile strength at break and hardness of the resulting coating.
The composition A according to the invention, preferably comprises the isocyanate compound A1 in an amount of 50 to 95 wt.-%, more preferably 60 to 95 wt.-% and most preferably 80 to 95 wt.-%, based on the total weight of the composition A.
The composition A comprises the catalyst A2 preferably in an amount of 0.001 to 10 wt.-%, more preferably 0.01 to 1 wt.-%, even more preferably 0.02 to 0.5 wt.-%, most preferably 0.02 to 0.1 wt.-%, based on the total weight of the composition A.
Further, the composition A preferably comprises component A3 in an amount of 2 to 40 wt.-%, more preferably 2 to 20 wt.-%, even more preferably 3 to 18 wt.-% and most preferably 4.5 to 14 wt.-%, based on the total weight of the composition A.
In a preferred embodiment, the composition A consists of the components A1, A2 and A3.
In another preferred embodiment, the composition A comprises

| | |
|---|---|
| 50 to 95 wt.-% of A1 | an Isocyanate compound, comprising an isocyanate-terminated prepolymer B which is obtained by reaction of a composition comprising<br>B1 at least one isocyanate-reactive compound,<br>B2 at least one polyisocyanate, and<br>optionally<br>B3 additive, |
| 0.001 to 10 wt.-% of A2 | a catalyst, |
| 2 to 40 wt.-% of A3 | a polyol, comprising at least 25 wt.-%, based on the weight of component A3, of a polyol A3.1 with a molecular weight of 210 g/mol or less. |

In another more preferred embodiment, the composition A consists of

| | |
|---|---|
| 50 to 95 wt.-% of A1 | an Isocyanate compound, comprising an isocyanate-terminated prepolymer B which is obtained by reaction of a composition comprising<br>B1 at least one isocyanate-reactive compound,<br>B2 at least one polyisocyanate, and<br>optionally |
| | B3 additive, |
| 0.001 to 10 wt.-% of A2 | a catalyst, |
| 2 to 40 wt.-% of A3 | a polyol, comprising at least 25 wt.-%, based on the weight of component A3, of a polyol A3.1 with a molecular weight of 210 g/mol or less, |

wherein the sum of wt.-% of components A1, A2 and A3 equals 100 wt.-%.
The composition A is preferably prepared in step (i) by mixing the components A1, A2, A3 and optionally further components together and then applied onto a substrate. The curing in step (ii) is carried out preferably at a temperature of 100°C or less, more preferably 50°C and less and most preferably at 5 to 35 °C. The substrate is preferably a polymer composite material, a top coat, concrete, metal, or wood.
The composition can be used for wind turbines, for example as protective coating of the leading edges of the rotor blades, or in construction applications, like flooring or waterproofing. Examples for substrate materials are polymer composite materials, top coats, concrete, metal, or wood.

## Experimental Section

### Methods

Unless stated otherwise all percentages are given as weight percentages.
Unless stated otherwise viscosities $\eta$ were determined at 23 °C and a shear rate of 50/s according to DIN 53019.

Isocyanate contents were determined according to DIN-EN ISO 11909.

Residual content of diisocyanates was determined according to DIN EN ISO 10283.

Differential scanning calorimetry was performed on a TA Instruments DSC Q2000 calibrated with Indium, tin and lead. 5-10 mg of sample were weighed into a closed aluminum vessel. Purging gas was nitrogen at 50 mL/min. Three heating cycles were performed between -80 °C and +80 °C with a heating rate of 20 K/min and nitrogen gas cooling. The melting point $T_m$ was defined as the temperature at the peak of the melting endotherm.

For the drying times the systems were applied on a glass plate using a bar shaped applicator (90 µm). The respective drying times were recorded according to DIN EN ISO 9117-5 and are given in table 2 for the drying stages 1 (T1), 3 (T3) and 4 (T4).

**Materials and Abbreviations**

HDI: Hexamethylenediisocyanate (Desmodur® H, Covestro Deutschland AG)

PDI: Pentamethylenediisocyanate

PTHF: difunctional poly(tetrahydrofurane), products with number average molar masses of 250 and1000 g/mol were purchased from BASF SE. Difunctional poly(tetrahydrofurane) with an average molar mass of 650 g/mol were purchased from Merck KGaA.

PO3G: poly(1,3-propanediol)

PCL: poly(ε-caprolactone)

PPG: poly(propyleneglycol)

BD: 1,4-butanediol

HD: 1,6-hexanediol

Polyol 1: difunctional poly(1,2-propanediol) with a number average molar mass of 218 g/mol.

Polyol 2: difunctional poly(1,2-propanediol) with a number average molar mass of 1000 g/mol.

Castor oil FSG: product of Alberdingk Boley, multifunctional polyol with an average OH-number of 172 mg KOH/g.

Velvetol® H250: difunctional poly(1,3-propanediol) with a number average molar mass of 250 g/mol was purchased from Alessa GmbH.

Ecoprol® H1000: difunctional poly(1,3-propanediol) with a number average molar mass of 1000 g/mol (OH-number 112 mg KOH/g) was provided by SK Chemicals.

CAPA® 2043: difunctional poly(ε-caprolactone) with a number average molar mass of 400 g/mol and started on 1,4-butanediol was provided by Ingevity.

CAPA® 2101A: difunctional poly(ε-caprolactone) with a number average molar mass of 1000 g/mol and started on 2,2-dimethylpropane-1,3-diol was provided by Ingevity.

CAPA® 3091: trifunctional poly(ε-caprolactone) with a number average molar mass of 920 g/mol and started on trimethylolpropane was provided by Ingevity.

Polyisocyanate 1:HDI-based polyisocyanate comprising HDI-uretdione with an NCO content of 21.8% (Desmodur® N 3400, Covestro Deutschland AG).

Polyisocyanate 2: HDI-based polyisocyanate with an NCO content of 23.0% (Desmodur® ultra N 3600, Covestro Deutschland AG).

Polyisocyanate 3: HDI-based polyisocyanate with an NCO content of 19.5% (Desmodur® ultra N 31100, Covestro Deutschland AG).

Dibutyl phosphate was purchased from Merck KGaA.

DBTL: dibutyltinlaurate was purchased from Merck KGaA.

Branched polyester polyol 1

Polyester polyol A1 as described in WO 2016/116376 A1 at page 15, lines 3 to 10.

Prepolymer example 1

784 g of HDI were heated to 80 °C. Over the course of 1 h 216 g of Polyol 1 were added dropwise while stirring. The reaction mixture was stirred at 80 °C until an NCO content of 30.8% was reached. Excess HDI was removed via distillation.

Prepolymer example 2

Prepolymer example 2 corresponds to mixture of 85 parts of example 1 in WO2016/116376 and 15 parts of polyisocyanate 1.

Prepolymer example 3

2688 g of HDI were heated to 80 °C. Over the course of 1.5 h 1052.9 g of castor oil FSG were added dropwise while stirring. The reaction mixture was stirred at 80 °C for another 1.5 h until an NCO content of 32.7% was reached. Excess HDI was removed via distillation employing a short path evaporator (pre-evaporator at 130 °C, main evaporator at 120 °C, pressure of 0.06 mbar).

Prepolymer example 4

2520 g of HDI and 2.0 g of dibutyl phosphate were heated to 80 °C. Over the course of 1 h 1500 g of Polyol 2 were added dropwise while stirring. The reaction mixture was stirred at 80 °C for another 3 h until an NCO content of 28.2% was reached. Excess HDI was removed via distillation employing a short path evaporator (pre-evaporator at 130 °C, main evaporator at 120 °C, pressure of 0.2 mbar).

Prepolymer example 5

3080 g of PDI were heated to 80 °C. Over the course of 0.5 h 814.8 g of CAPA 2043 were added dropwise while stirring. The reaction mixture was stirred at 80 °C for another 2 h until an NCO content of 38.7% was reached. Excess PDI was removed via distillation employing a short path evaporator (pre-evaporator at 130 °C, main evaporator at 120 °C, pressure of 0.06 mbar).

Prepolymer example 6

1680 g of HDI and 1.3 g dibutyl phosphate were heated to 80 °C. Over the course of 0.5 h 1000 g of CAPA 2101A were added dropwise while stirring. The reaction mixture was stirred at 80 °C for another 1 h until an NCO content of 28.7% was reached. Excess HDI was removed via distillation employing a short path evaporator (pre-evaporator at 130 °C, main evaporator at 120 °C, pressure of 0.2 mbar).

Prepolymer example 7

3360 g of HDI were heated to 80 °C. Over the course of 1 h 813.6 g of CAPA 2043 were added dropwise while stirring. The reaction mixture was stirred at 80 °C for another 1.5 h until an NCO content of 36.1% was reached. Excess HDI was removed via distillation employing a short path evaporator (pre-evaporator at 130 °C, main evaporator at 120 °C, pressure of 0.06 mbar).

Prepolymer example 8

2520 g of HDI were heated to 80 °C. Over the course of 1 h 975 g of PTHF 650 were added dropwise while stirring. The reaction mixture was stirred at 80 °C for another 1.5 h until an NCO content of 31.9% was reached. Excess HDI was removed via distillation employing a short path evaporator (pre-evaporator at 130 °C, main evaporator at 120 °C, pressure of 0.5 mbar).

Prepolymer example 9

1470 g of HDI were heated to 80 °C. Over the course of 0.5 h 525 g of CAPA 3091 were added dropwise while stirring. The reaction mixture was stirred at 80 °C for another 2 h until an NCO content of 33.1% was reached. Excess HDI was removed via distillation employing a short path evaporator (pre-evaporator at 130 °C, main evaporator at 120 °C, pressure of 0.06 mbar).

Prepolymer example 10

840 g of HDI were heated to 80 °C. Over the course of 1 h 500 g of Ecoprol H1000 were added dropwise while stirring. The reaction mixture was stirred at 80 °C for another 2 h until an NCO content of 28.2% was reached. Excess HDI was removed via distillation employing a short path evaporator (pre-evaporator at 130 °C, main evaporator at 120 °C, pressure of 0.4 mbar).

Prepolymer example 11

3080 g of PDI were heated to 80 °C. Over the course of 1 h 454.3 g of Velvetol H250 were added dropwise while stirring. The reaction mixture was stirred at 80 °C for another 1 h until an NCO content of 42.7% was reached. Excess PDI was removed via distillation employing a short path evaporator (pre-evaporator at 130 °C, main evaporator at 120 °C, pressure of 0.05 mbar).

Prepolymer example 12

3673.2 g of HDI were heated to 80 °C. Over the course of 0.5 h 626.8 g of branched polyester polyol 1 were added dropwise while stirring. The reaction mixture was stirred at 100 °C for another 0.75 h until an NCO content of 40.0% was reached. Excess HDI was removed via distillation employing a short path evaporator (pre-evaporator at 130 °C, main evaporator at 120 °C, pressure of 0.5 mbar).

Prepolymer example 13

HDI-based polyisocyanate comprising poly(ε-caprolactone) according to example 5 of EP 0 336 205 with an NCO content of 11.0%.

Preparation of compositions and application thereof

The compositions were prepared by manually premixing the polyol A3 and a 10 % DBTL in butyl acetate solution followed by adding the prepolymer B and mixing in a speedmixer for 30 s at 3000 rpm. The amounts of each component are presented in table 1. These compositions are then used to prepare coatings, where the curing time is measured. The results are shown in tables 2 to 4.

**Table 1: Compositions**

| | Ex. 1* | Ex. 2 | Ex. 3 | Ex. 4* | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|
| Prepolymer Ex. 1 | 78.30 | | | | | | | | | | | |
| Prepolymer Ex. 2 | | 88.55 | | | | | | | | | | |
| Prepolymer Ex. 3 | | | 125.48 | | | | | | | | | |
| Prepolymer Ex. 4 | | | | 168.73 | | | | | | | | |
| Prepolymer Ex. 5 | | | | | 87.38 | | | | | | | |
| Prepolymer Ex. 6 | | | | | | 170.81 | | | | | | |
| Prepolymer Ex. 7 | | | | | | | 91.46 | | | | | |
| Prepolymer Ex. 8 | | | | | | | | 124.83 | | | | |
| Prepolymer Ex. 9 | | | | | | | | | 117.91 | | | |
| Prepolymer Ex. 10 | | | | | | | | | | 160.44 | | |
| Prepolymer Ex. 11 | | | | | | | | | | | 68.30 | |
| Prepolymer Ex. 12 | | | | | | | | | | | | 95.31 |
| 1,4-Butanediol | 10.00 | 10.00 | 10.00 | 10.00 | 10.00 | 10.00 | 10.00 | 10.00 | 10.00 | 10.00 | 10.00 | 10.00 |
| DTBL (10% in butyl acetate) | 0.40 | 0.44 | 0.61 | 0.80 | 0.44 | 0.81 | 0.46 | 0.61 | 0.58 | 0.77 | 0.35 | 0.47 |
| Sum | 88.70 | 98.99 | 136.09 | 179.53 | 97.82 | 181.62 | 101.92 | 135.44 | 128.49 | 171.21 | 78.65 | 105.78 |
| NCO:OH ratio | 1.05 | 1.05 | 1.05 | 1.05 | 1.05 | 1.05 | 1.05 | 1.05 | 1.05 | 1.05 | 1.05 | 1.05 |

Except for the NCO:OH ratio, all values in table 1 are in gram.
* Comparative examples

**Table 1 (continued): Compositions**

| | Ex. 13* | Ex. 14* | Ex. 15* | Ex. 16 | Ex. 17 | Ex. 18 | Ex. 19 | Ex. 20 | Ex. 21 | Ex. 22* |
|---|---|---|---|---|---|---|---|---|---|---|
| Prepolymer Ex. 1 | 74.50 | | | | | | | | | |
| Polyisocyanate 2 | | 42.64 | | | | | | | | |
| Polyisocyanate 3 | | | 50.10 | | | | | | | |
| Prepolymer Ex. 13 | | | | 89.01 | | | | | | |
| Prepolymer Ex. 2 | | | | | 67.52 | 81.69 | 65.91 | 54.25 | 42.59 | 19.95 |
| 1,4-Butanediol | 6.67 | 10.00 | 10.00 | 10.00 | | 9.00 | 6.70 | 5.00 | 3.30 | |
| Ethyleneglycol | | | | | | | | | | |
| 1,6-Hexanediol | | | | | 10.00 | | | | | |
| CAPA 2043 | | | | | | 1.00 | 3.30 | 5.00 | 6.70 | 10.00 |
| PTHF250 | 3.89 | | | | | | | | | |
| PTHF1000 | 15.64 | | | | | | | | | |
| DTBL (10% in butyl acetate) | 0.45 | 0.24 | 0.27 | 0.45 | 0.35 | 0.41 | 0.34 | 0.29 | 0.24 | 0.13 |
| Sum | 101.24 | 52.88 | 60.37 | 99.46 | 77.87 | 91.31 | 76.25 | 64.54 | 52.83 | 30.08 |
| NCO:OH ratio | 1.05 | 1.05 | 1.05 | 1.05 | 1.05 | 1.05 | 1.05 | 1.05 | 1.05 | 1.05 |

Except for the NCO:OH ratio, all values in table 1 are in gram.
* Comparative examples

**Table 1 (continued): Compositions**

| | Ex. 23 | Ex. 24 | Ex. 25 | Ex. 26 | Ex. 27* |
|---|---|---|---|---|---|
| Prepolymer Ex. 2 | 88.55 | 88.55 | 88.55 | 88.55 | 88.55 |
| 1,4-Butanediol | 10.00 | 10.00 | 10.00 | 10.00 | 10.00 |
| DTBL (10% in butyl acetate) | 0.29 | 0.29 | 0.59 | 0.59 | - |
| Sum | 98.84 | 98.84 | 99.14 | 99.14 | 89.55 |
| NCO:OH ratio | 1.05 | 1.05 | 1.05 | 1.05 | 1.05 |

Except for the NCO:OH ratio, all values in table 1 are in gram.
* Comparative examples

**Table 2: Compositions comprising different polyols B1**

| Ex. | B1 | Molar mass [g/mol] | Functionality | B2 | NCO-content B [%] | Monomer content B [%] | η [mPas] | $T_m$ [°C] | A3 | A2 [ppm] | Mixing speed [rpm] | T1 [min] | T3 [min] | T4 [min] |
|---|---|---|---|---|---|---|---|---|---|---|---|---|---|---|
| 1* | PPG | 218 | 2 | HDI | 12.5 | ≤ 0.1 | 4250 | none | BD | 450 | 3000 | 540 | > 24h | > 24h |
| 2 | PCL+PES | 650+ 430 | 2 | HDI | 11.0 | < 0.3 | 1550 | < 20 | BD | 450 | 3000 | 60 | 85 | 100 |
| 3 | castor oil | | ~3 | HDI | 7.80 | 0.11 | 4240 | none | BD | 450 | 3000 | 135 | 240 | 540 |
| 4* | PPG | 1000 | 2 | HDI | 5.80 | 0.04 | 1317 | none | BD | 450 | 3000 | > 24h | > 24h | > 24h |
| 5 | PCL | 400 | 2 | PDI | 11.00 | 0.13 | 1420 | none | BD | 450 | 3000 | 175 | 210 | 225 |
| 6 | PCL | 1000 | 2 | HDI | 5.73 | 0.03 | 3289 | < 50 | BD | 450 | 3000 | 150 | 240 | 340 |
| 7 | PCL | 400 | 2 | HDI | 10.70 | 0.35 | 1985 | none | BD | 450 | 3000 | 40 | 55 | 65 |
| 8 | PTHF | 650 | 2 | HDI | 7.84 | 0.08 | 1833 | < 20 | BD | 450 | 3000 | 50 | 110 | 125 |
| 9 | PCL | 920 | 3 | HDI | 8.30 | 0.08 | 7445 | none | BD | 450 | 3000 | 60 | 85 | 100 |
| 10 | PO3G | 1000 | 2 | HDI | 6.10 | 0.09 | 1650 | < 30 | BD | 450 | 3000 | 95 | 110 | 135 |
| 11 | PO3G | 250 | 2 | PDI | 14.33 | 0.37 | 936 | none | BD | 450 | 3000 | 325 | 385 | 515 |
| 12 | PES | 430 | 2 | HDI | 10.27 | 0.08 | 3425 | none | BD | 450 | 3000 | 70 | 115 | 180 |
| 13* | PPG | 218 | 2 | HDI | 12.5 | ≤ 0.1 | 4250 | none | 25% BD<br>60% PTHF 1000<br>15% PTHF 250 | 450 | 3000 | > 24h | > 24h | > 24h |
| 14* | none | - | - | HDI | 23.0 | < 0.1 | 1200 | none | BD | 450 | 3000 | 155 | 10-24h | 10-24h |
| 15* | none | - | - | HDI | 19.5 | < 0.1 | 550 | none | BD | 450 | 3000 | 175 | > 24h | > 24h |
| 16 | PCL | 650 | 2 | HDI | 11.0 | < 0.1 | 6000 | none | BD | 450 | 3000 | 105 | 135 | 155 |

* Comparative examples

Table 2 shows the effect of the inventive prepolymer B with different polyols B1. Compositions comprising a prepolymer with a polyol B1 not according to the invention are used in examples 1, 4 and 13. These compositions have high drying times which are in most cases longer than 24 hours. Compared to this, compositions comprising the inventive prepolymer B in examples 2, 3 and 5 to 12 have a much shorter drying time where 540 minutes for the drying stage T4 is the maximum (example 3). Further, example 13 shows that adding the polyols B1 in a composition comprising a prepolymer instead of using the polyols B1 for the preparation of the prepolymer still results in long drying times of more than 24 hours for each drying stage T1, T3 and T4. Example 13 is a comparative according to the teaching of EP 2 849 937 A1. Comparative examples 14 and 15 further show that using no prepolymer B but only polyisocyanates based on HDI result in short T1 drying times of 155 and 175 min, however, T3 and T4 drying times are at least 10 hours which is longer than for the examples according to the invention. In example 16 the prepolymer comprises a polyol B1.1 and is therefore according to the invention. The prepolymer B of example 16 was trimerized in a subsequent step. Even with this additional step, the composition result in drying times for T1, T3 and T4 of 155 minutes and less.

In table 3 it is shown that a polyol A3 according to the invention is necessary to achieve short drying times. The compositions of examples 2 and 17 to 22 comprise the same prepolymer B but different polyols A3. Example 22 does not comprise a polyol A3 according to the invention but a polyol with a molecular weight of 400 g/mol. The drying time for drying stage T1 is 250 min and for T3 and T4 more than 24 h. Examples 2 and 17 to 21 comprise different polyols A3 as well as different amounts of polyol A3 according to the invention. In these examples the drying time for the drying stage T1 is at maximum 130 min and for T3 and T4 not more than 235 min.

In table 4 it is shown that a catalyst A2 is necessary for the composition. Examples 2 and 23 to 27 comprise the same formulation except that example 27 is free of a catalyst. The drying times for the drying stages T1, T3 and T4 of the composition in example 27 are longer than 24 h. In comparison to example 27, the compositions according to the invention of examples 2 and 23 to 26 comprise a catalyst A2 which result in drying times of not more than 255 min.

**Table 3: Compositions comprising different polyols A3**

| Ex. | B1 | Molar mass [g/mol] | Functionality | B2 | NCO-content B [%] | Monomer content [%] | η [mPas] | Tm [°C] | A3 | A2 [ppm] | Mixing speed [rpm] | T1 [min] | T3 [min] | T4 [min] |
|---|---|---|---|---|---|---|---|---|---|---|---|---|---|---|
| 2 | PCL+PES | 650+43 0 | 2 | HDI | 11.0 | <0.3 | 1550 | < 20 | BD | 450 | 3000 | 60 | 85 | 100 |
| 17 | PCL+PES | 650+ 430 | 2 | HDI | 11.0 | <0.3 | 1550 | < 20 | HD | 450 | 3000 | 50 | 120 | 140 |
| 18 | PCL+PES | 650+ 430 | 2 | HDI | 11.0 | <0.3 | 1550 | <20 | 90% BD<br>10% CAPA 2043 | 450 | 3000 | 95 | 115 | 150 |
| 19 | PCL+PES | 650+ 430 | 2 | HDI | 11.0 | < 0.3 | 1550 | < 20 | 67% BD<br>33% CAPA 2043 | 450 | 3000 | 75 | 120 | 165 |
| 20 | PCL+PES | 650+ 430 | 2 | HDI | 11.0 | < 0.3 | 1550 | < 20 | 50% BD<br>50% CAPA 2043 | 450 | 3000 | 105 | 140 | 200 |
| 21 | PCL+PES | 650+ 430 | 2 | HDI | 11.0 | < 0.3 | 1550 | < 20 | 33% BD<br>67% CAPA 2043 | 450 | 3000 | 130 | 175 | 235 |
| 22* | PCL+PES | 650+ 430 | 2 | HDI | 11.0 | < 0.3 | 1550 | < 20 | CAPA 2043 | 450 | 3000 | 250 | > 24h | > 24h |

* Comparative examples

**Table 4: Compositions comprising different amounts of catalyst A2**

| Ex. | B1 | Molar mass [g/mol] | Functionality | B2 | NCO-content B [%] | Monomer content [%] | η [mPas] | $T_m$ [°C] | A3 | A2 [ppm] | Mixing speed [rpm] | T1 [min] | T3 [min] | T4 [min] |
|---|---|---|---|---|---|---|---|---|---|---|---|---|---|---|
| 2 | PCL+PES | 650+430 | 2 | HDI | 11.0 | < 0.3 | 1550 | < 20 | BD | 450 | 3000 | 60 | 85 | 100 |
| 23 | PCL+PES | 650+430 | 2 | HDI | 11.0 | < 0.3 | 1550 | < 20 | BD | 300 | 1000 | 140 | 180 | 255 |
| 24 | PCL+PES | 650+430 | 2 | HDI | 11.0 | < 0.3 | 1550 | < 20 | BD | 300 | 3000 | 105 | 145 | 170 |
| 25 | PCL+PES | 650+430 | 2 | HDI | 11.0 | < 0.3 | 1550 | < 20 | BD | 600 | 1000 | 65 | 95 | 120 |
| 26 | PCL+PES | 650+430 | 2 | HDI | 11.0 | < 0.3 | 1550 | < 20 | BD | 600 | 3000 | 55 | 85 | 95 |
| 27* | PCL+PES | 650+430 | 2 | HDI | 11.0 | < 0.3 | 1550 | < 20 | BD | 0 | 3000 | > 24h | > 24h | > 24h |

* Comparative examples

## Claims

1. A composition A comprising

A1 an isocyanate compound, comprising an isocyanate-terminated prepolymer B which is obtained by reaction of a composition comprising

B1 at least one isocyanate-reactive compound,
B2 at least one polyisocyanate, and
optionally
B3 additive,

A2 a catalyst,
A3 a polyol, and
wherein component B1 comprises at least one compound B 1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof, and wherein component A3 comprises at least a polyol A3.1 with a molecular weight of 210 g/mol or less.

2. A composition according to claim 1, wherein the number-average molecular weight of B1.1 is in the range of from 150 g/mol to 1200 g/mol.

3. A composition according to claim 1 or 2, wherein B2 is an aliphatic polyisocyanate.

4. A composition according to claim 3, wherein the aliphatic polyisocyanate is hexamethylene diisocyanate, pentamethylene diisocyanate, modified polyisocyanates based on the before mentioned or mixtures thereof.

5. A composition according to claim 3, wherein the aliphatic polyisocyanate is hexamethylene diisocyanate or modified polyisocyanates based on hexamethylene diisocyanate.

6. A composition according to any of claims 1 to 5, wherein the NCO-content of the isocyanate-terminated prepolymer B is in the range of from 2% to 20%.

7. A composition according to any of claims 1 to 6, wherein the residual monomer content of the isocyanate-terminated prepolymer B is 1 wt.-% or less, preferably 0.5 wt.-% or less, more preferably 0.3 wt.-% or less.

8. A composition according to any of claims 1 to 8, wherein the amount of catalyst A2 is in the range of from 0.001 to 1.0 wt.-%.

9. A composition according to any of claims 1 to 9, wherein the polyol A3 has a molecular weight in the range of from 64 to 210 g/mol.

10. A composition according to claim 1, wherein the composition comprises an isocyanate-terminated prepolymer B, which is obtained by reaction of a composition comprising

B1 comprising a polyol B1.1 with a number-average molecular weight in the range of from 200 g/mol to 1200 g/mol and an OH-functionality in the range of from 1.5 to 3 which is selected from poly(ε-caprolactone), castor oil, hydrogenated castor oil, polytetrahydrofurane, poly(1,3-propanediol), polyesterpolyol or mixtures thereof,
B2 comprising hexamethylene diisocyanate, pentamethylene diisocyanate, modified polyisocyanates based on the before mentioned or mixtures thereof, and
optionally
B3 a catalyst,
and wherein the isocyanate-terminated prepolymer B has an NCO-content in the range of from 2% to 20% and a residual monomer content of 0.5% or less.

12. A composition according to claim 1, wherein the composition A comprises

| | |
|---|---|
| 50 to 95 wt.-% of A1 | an isocyanate compound, comprising an isocyanate-terminated prepolymer B which is obtained by reaction of a composition comprising<br>B1 at least one isocyanate-reactive compound,<br>B2 at least one polyisocyanate, and<br>optionally<br>B3 additive,<br>wherein the NOC:OH equivalent ratio in the reaction is 1.5:1 to 20:1 |
| 0.001 to 1.0 wt.-% of A2 | a catalyst, and |
| 2 to 40 wt.-% of A3 | a polyol, |

wherein component B1 comprises at least 80 wt.-%, based on the weight of component B1, at least one compound B1.1 with a number-average molecular weight in the range of from 150 g/mol to 1500 g/mol which is selected from the group of poly(ε-caprolactone), castor oil, hydrogenated castor oil, polytetrahydrofurane, poly(1,3-propanediol), polyesterpolyol and mixtures thereof,
wherein component A3 comprises at least 25 wt.-%, based on the weight of component A3, of a polyol A3.1 with a molecular weight in the range of from 64 g/mol to 210 g/mol.

**13.** Process for preparing a coating comprising the steps of

(i) applying a composition A according to any of claims 1 to 12 onto a substrate,
(ii) curing the composition A on the substrate.

**13.** A process according to claim 12, wherein the substrate is a polymer composite material, a top coat, concrete, metal, or wood.

**14.** A coating obtained by a process according to claim 12 or 13.

**15.** Use of a coating according to claim 14 for wind turbines or construction applications.

Europäisches Patentamt
European Patent Office
Office européen des brevets

# EUROPEAN SEARCH REPORT

Application Number
EP 24 17 4161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/122869 A1 (MICHAUD GUILLAUME [FR] ET AL) 29 April 2021 (2021-04-29) * paragraph [0265]; example C1; tables 1-3 * | 1-15 | INV. C08G18/10 C08G18/12 C08G18/36 C08G18/42 C08G18/48 C08G18/73 C09D175/04 C09D175/06 C09D175/08 |
| X | US 2019/169394 A1 (WAGNER NATALIE [CH]) 6 June 2019 (2019-06-06) * paragraph [0022]; examples 1,2 * | 1-11 | |
| X | EP 3 051 331 A1 (MITSUI CHEMICALS INC [JP]) 3 August 2016 (2016-08-03) * paragraphs [0057], [0265]; examples 1-18; tables 1-3 * | 1-11 | |
| X | GB 1 518 687 A (BASF AG) 19 July 1978 (1978-07-19) * examples 6-8; table 2 * | 1-11 | |
| X | US 2018/312437 A1 (CAO DONGWEI [CN] ET AL) 1 November 2018 (2018-11-01) * example 12 * | 1-11 | TECHNICAL FIELDS SEARCHED (IPC) |
| X | WO 2018/089638 A1 (BASF SE [DE]; LUESING JANINE [US]) 17 May 2018 (2018-05-17) * examples 14,20,21 * | 1-11 | C08G C09D |
| X | WO 2020/156800 A1 (BASF SE [DE]) 6 August 2020 (2020-08-06) * page 14 * | 1-11 | |
| X | EP 4 116 346 A1 (MITSUI CHEMICALS INC [JP]) 11 January 2023 (2023-01-11) * examples 1-10 * | 1-11 | |

-/--

The present search report has been drawn up for all claims

1

| Place of search | Date of completion of the search | Examiner |
|---|---|---|
| Munich | 30 September 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 24 17 4161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/193178 A1 (MOJIA SHANGHAI BIOTECHNOLOGY CO LTD [CN]) 12 October 2023 (2023-10-12) * page 21, lines 6,7; examples 1.1,1.2; tables 1-4,6,7A,7B,8 * ----- | 1-11 | |
| X | US 2009/318246 A1 (SHIGA KAZUYOSHI [JP] ET AL) 24 December 2009 (2009-12-24) * paragraphs [0138] - [0140] * ----- | 1-11 | |
| X | US 6 054 499 A (PAULS MATHIAS [CH] ET AL) 25 April 2000 (2000-04-25) * example 7 * ----- | 1-11 | |
| X | US 6 552 097 B1 (PAULS MATHIAS [CH] ET AL) 22 April 2003 (2003-04-22) * examples 1-8 * ----- | 1-11 | |
| X | WO 2013/158621 A1 (NOVOMER INC [US]) 24 October 2013 (2013-10-24) * example 8 * ----- | 1-11 | TECHNICAL FIELDS SEARCHED (IPC) |
| X | US 2003/220649 A1 (BAO QI-BIN [US] ET AL) 27 November 2003 (2003-11-27) * paragraph [0223] * ----- | 1-11 | |
| X | US 5 217 838 A (WILSON JOHN C [US] ET AL) 8 June 1993 (1993-06-08) * column 17, lines 27-68 * ----- | 1-11 | |
| X | EP 3 587 466 A1 (MITSUI CHEMICALS INC [JP]) 1 January 2020 (2020-01-01) * examples 1-23 * ----- | 1-11 | |
| X | US 2012/052985 A1 (SHIGA KAZUYOSHI [JP] ET AL) 1 March 2012 (2012-03-01) * paragraph [0099]; examples 1-16 * ----- -/-- | 1-11 | |

The present search report has been drawn up for all claims

1

| Place of search | Date of completion of the search | Examiner |
|---|---|---|
| Munich | 30 September 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 17 4161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 805 287 A1 (MITSUI CHEMICALS INC [JP]) 14 April 2021 (2021-04-14) * paragraphs [0190] - [0192]; examples 1-21 * ----- | 1-11 | |
| X | EP 0 850 964 A1 (BASF AG [DE]) 1 July 1998 (1998-07-01) * examples 1,2 * ----- | 1-11 | |
| X | EP 4 190 835 A1 (CANON KK [JP]) 7 June 2023 (2023-06-07) * examples 41,43-48 * ----- | 1-11 | |

TECHNICAL FIELDS SEARCHED (IPC)

The present search report has been drawn up for all claims

1

| Place of search | Date of completion of the search | Examiner |
|---|---|---|
| Munich | 30 September 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO. EP 24 17 4161

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| US 2021122869 A1 | 29-04-2021 | EP 3774971 A1 | 17-02-2021 |
| | | FR 3079839 A1 | 11-10-2019 |
| | | US 2021122869 A1 | 29-04-2021 |
| | | WO 2019193278 A1 | 10-10-2019 |
| US 2019169394 A1 | 06-06-2019 | DE 102016113988 A1 | 01-02-2018 |
| | | EP 3491038 A1 | 05-06-2019 |
| | | US 2019169394 A1 | 06-06-2019 |
| | | WO 2018020031 A1 | 01-02-2018 |
| EP 3051331 A1 | 03-08-2016 | CN 104781229 A | 15-07-2015 |
| | | CN 105017080 A | 04-11-2015 |
| | | CN 105556377 A | 04-05-2016 |
| | | EP 3037411 A1 | 29-06-2016 |
| | | EP 3051331 A1 | 03-08-2016 |
| | | EP 3168256 A1 | 17-05-2017 |
| | | ES 2729067 T3 | 30-10-2019 |
| | | HK 1209099 A1 | 24-03-2016 |
| | | HK 1224383 A1 | 18-08-2017 |
| | | JP 5674990 B1 | 25-02-2015 |
| | | JP 5710065 B1 | 30-04-2015 |
| | | JP 5877251 B2 | 02-03-2016 |
| | | JP 2016020549 A | 04-02-2016 |
| | | JP 2016021040 A | 04-02-2016 |
| | | JP WO2015046370 A1 | 09-03-2017 |
| | | KR 20150063573 A | 09-06-2015 |
| | | KR 20150063576 A | 09-06-2015 |
| | | KR 20160044036 A | 22-04-2016 |
| | | TW 201516021 A | 01-05-2015 |
| | | TW 201520238 A | 01-06-2015 |
| | | TW 201808891 A | 16-03-2018 |
| | | TW 201808892 A | 16-03-2018 |
| | | US 2015342276 A1 | 03-12-2015 |
| | | US 2015346387 A1 | 03-12-2015 |
| | | US 2016238857 A1 | 18-08-2016 |
| | | WO 2015046369 A1 | 02-04-2015 |
| | | WO 2015046370 A1 | 02-04-2015 |
| GB 1518687 A | 19-07-1978 | ES 440766 A1 | 16-06-1977 |
| | | FR 2283918 A1 | 02-04-1976 |
| | | GB 1518687 A | 19-07-1978 |
| | | IT 1044478 B | 20-03-1980 |
| | | JP S5152496 A | 10-05-1976 |
| | | NL 7510512 A | 09-03-1976 |
| US 2018312437 A1 | 01-11-2018 | US 2018312437 A1 | 01-11-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 17 4161

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| | | WO 2016206636 A1 | 29-12-2016 |
| WO 2018089638 A1 | 17-05-2018 | CN 109923137 A | 21-06-2019 |
| | | CN 109963910 A | 02-07-2019 |
| | | EP 3538576 A1 | 18-09-2019 |
| | | EP 3538611 A1 | 18-09-2019 |
| | | US 2019315909 A1 | 17-10-2019 |
| | | US 2019322789 A1 | 24-10-2019 |
| | | WO 2018089638 A1 | 17-05-2018 |
| | | WO 2018089645 A1 | 17-05-2018 |
| WO 2020156800 A1 | 06-08-2020 | CA 3127514 A1 | 06-08-2020 |
| | | CN 113366043 A | 07-09-2021 |
| | | EP 3917981 A1 | 08-12-2021 |
| | | US 2022098359 A1 | 31-03-2022 |
| | | WO 2020156800 A1 | 06-08-2020 |
| EP 4116346 A1 | 11-01-2023 | CN 115087680 A | 20-09-2022 |
| | | EP 4116346 A1 | 11-01-2023 |
| | | JP 7364780 B2 | 18-10-2023 |
| | | JP WO2021177175 A1 | 10-09-2021 |
| | | TW 202138416 A | 16-10-2021 |
| | | US 2023082765 A1 | 16-03-2023 |
| | | WO 2021177175 A1 | 10-09-2021 |
| WO 2023193178 A1 | 12-10-2023 | CN 115322330 A | 11-11-2022 |
| | | WO 2023193178 A1 | 12-10-2023 |
| US 2009318246 A1 | 24-12-2009 | JP 5590779 B2 | 17-09-2014 |
| | | JP 2010000238 A | 07-01-2010 |
| | | US 2009318246 A1 | 24-12-2009 |
| US 6054499 A | 25-04-2000 | AT E156499 T1 | 15-08-1997 |
| | | AT E169312 T1 | 15-08-1998 |
| | | AT E280199 T1 | 15-11-2004 |
| | | AU 690538 B2 | 30-04-1998 |
| | | AU 690894 B2 | 07-05-1998 |
| | | AU 691484 B2 | 21-05-1998 |
| | | CA 2155876 A1 | 18-08-1994 |
| | | CA 2155878 A1 | 18-08-1994 |
| | | DK 0684960 T3 | 10-05-1999 |
| | | DK 0684968 T3 | 23-03-1998 |
| | | EP 0683805 A1 | 29-11-1995 |
| | | EP 0684960 A1 | 06-12-1995 |
| | | EP 0684968 A1 | 06-12-1995 |
| | | ES 2107190 T3 | 16-11-1997 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 17 4161

This annex lists the patent family members relating to the patent documents cited in the above-mentioned European search report. The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| | | ES 2123767 T3 | 16-01-1999 |
| | | JP H08506370 A | 09-07-1996 |
| | | JP H08506371 A | 09-07-1996 |
| | | JP H08506602 A | 16-07-1996 |
| | | KR 960701114 A | 24-02-1996 |
| | | KR 960701135 A | 24-02-1996 |
| | | PL 310173 A1 | 27-11-1995 |
| | | PL 310174 A1 | 27-11-1995 |
| | | PL 310175 A1 | 27-11-1995 |
| | | US 6054499 A | 25-04-2000 |
| | | US 2003050357 A1 | 13-03-2003 |
| | | WO 9418256 A1 | 18-08-1994 |
| | | WO 9418265 A1 | 18-08-1994 |
| | | WO 9418268 A1 | 18-08-1994 |
| US 6552097 B1 | 22-04-2003 | NONE | |
| WO 2013158621 A1 | 24-10-2013 | CN 104428370 A | 18-03-2015 |
| | | CN 110791246 A | 14-02-2020 |
| | | CN 114774053 A | 22-07-2022 |
| | | EP 2838954 A1 | 25-02-2015 |
| | | JP 6599418 B2 | 30-10-2019 |
| | | JP 2015514848 A | 21-05-2015 |
| | | JP 2018024893 A | 15-02-2018 |
| | | KR 20150002832 A | 07-01-2015 |
| | | US 2013274401 A1 | 17-10-2013 |
| | | US 2015083326 A1 | 26-03-2015 |
| | | US 2015344751 A1 | 03-12-2015 |
| | | WO 2013158621 A1 | 24-10-2013 |
| US 2003220649 A1 | 27-11-2003 | AU 7178698 A | 03-06-1998 |
| | | EP 0873145 A2 | 28-10-1998 |
| | | EP 1230902 A1 | 14-08-2002 |
| | | JP 2002505592 A | 19-02-2002 |
| | | US 6306177 B1 | 23-10-2001 |
| | | US 2001004710 A1 | 21-06-2001 |
| | | US 2002156531 A1 | 24-10-2002 |
| | | US 2003195628 A1 | 16-10-2003 |
| | | US 2003220649 A1 | 27-11-2003 |
| | | US 2006253200 A1 | 09-11-2006 |
| | | US 2007038300 A1 | 15-02-2007 |
| | | WO 9820939 A2 | 22-05-1998 |
| US 5217838 A | 08-06-1993 | NONE | |
| EP 3587466 A1 | 01-01-2020 | CN 110248978 A | 17-09-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 17 4161

This annex lists the patent family members relating to the patent documents cited in the above-mentioned European search report. The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| | | EP 3587466 A1 | 01-01-2020 |
| | | JP 6838133 B2 | 03-03-2021 |
| | | JP WO2018155372 A1 | 21-11-2019 |
| | | KR 20190102258 A | 03-09-2019 |
| | | TW 201840623 A | 16-11-2018 |
| | | US 2019367667 A1 | 05-12-2019 |
| | | WO 2018155372 A1 | 30-08-2018 |
| US 2012052985 A1 | 01-03-2012 | CN 102526999 A | 04-07-2012 |
| | | JP 5484261 B2 | 07-05-2014 |
| | | JP 2012045223 A | 08-03-2012 |
| | | US 2012052985 A1 | 01-03-2012 |
| EP 3805287 A1 | 14-04-2021 | CN 112424252 A | 26-02-2021 |
| | | EP 3805287 A1 | 14-04-2021 |
| | | JP 7268015 B2 | 02-05-2023 |
| | | JP 2023059934 A | 27-04-2023 |
| | | JP WO2019230541 A1 | 08-07-2021 |
| | | KR 20200143472 A | 23-12-2020 |
| | | US 2021079216 A1 | 18-03-2021 |
| | | WO 2019230541 A1 | 05-12-2019 |
| EP 0850964 A1 | 01-07-1998 | CA 2221015 A1 | 23-06-1998 |
| | | DE 19654149 A1 | 25-06-1998 |
| | | EP 0850964 A1 | 01-07-1998 |
| EP 4190835 A1 | 07-06-2023 | CN 116057099 A | 02-05-2023 |
| | | EP 4190835 A1 | 07-06-2023 |
| | | US 2023159001 A1 | 25-05-2023 |
| | | WO 2022025273 A1 | 03-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2849937 A1
- WO 2016116376 A1
- EP 0336205 A2
- EP 3689943 A1
- WO 2016116376 A
- EP 0336205 A


### Non-patent literature cited in the description


- *DIN 53240-1*, June 2013